# EUROPÄISCHE PATENTSCHRIFT

(11) **EP 3 283 411 B1**
(45) Veröffentlichungstag und Bekanntmachung des Hinweises auf die Patenterteilung: **02.09.2020**
(21) Anmeldenummer: 16718602.2
(22) Anmeldetag: 12.04.2016
(51) Int. Cl.: B65G 17/34, B65G 47/96

(54) **VERBINDUNGSVORRICHTUNG, FÖRDERWAGEN UND FÖRDERANLAGE**
CONNECTING DEVICE, CONVEYING CARRIAGE AND CONVEYING INSTALLATION
DISPOSITIF DE LIAISON, CHARIOT DE TRANSPORT ET SYSTÈME DE TRANSPORT

(30) Priorität: 15.04.2015 DE 102015004787
(43) Veröffentlichungstag der Anmeldung: 21.02.2018
(73) Patentinhaber: Interroll Holding AG, 6592 Sant' Antonino (CH)
(72) Erfinder: DROSTE, Heinrich, 74889 Sinsheim (DE); EISINGER, Thomas, 74915 Waibstadt (DE)
(74) Vertreter: Müller-Boré & Partner Patentanwälte PartG mbB
(86) Internationale Anmeldenummer: PCT/EP2016/000604
(87) Internationale Veröffentlichungsnummer: WO 2016/165822

(56) Entgegenhaltungen:
- EP-A2- 0 222 444
- EP-A2- 2 025 628
- DE-A1- 19 605 570
- GB-A- 350 006
- US-A- 4 616 570
- US-A- 4 646 650
- US-A1- 2013 001 043

## Beschreibung

Die vorliegende Erfindung betrifft eine Verbindungsvorrichtung zum Verbinden eines Förderwagens mit einer Antriebskette, einen Förderwagen mit der Verbindungsvorrichtung und eine Förderanlage, in der zumindest ein Förderwagen mittels der Verbindungsvorrichtung mit einer Antriebskette verbunden ist.

In der Fördertechnik werden oftmals Förderwagen eingesetzt, welche auf Schienen entlang eines Förderweges bewegt werden, um Fördergut zu transportieren. In Sortieranlagen können die Förderwagen jeweils einen Fördergurt als Auflagefläche für das Fördergut aufweisen, wobei die Gurtförderrichtung des Fördergurtes quer zur Bewegungsrichtung des Förderwagens entlang der Schienen verlaufen kann. Derartige Sortieranlagen werden daher auch "Crossbelt-Sorter" genannt. Durch Betätigung des Fördergurtes an einer gewünschten Position des Förderwagens in der Sortieranlage kann das Fördergut quer zur Bewegungsrichtung des Förderwagens nach links oder rechts abgeworfen bzw. abgegeben werden.

Sortieranlagen, in welchen die Förderwagen im Wesentlichen in der horizontalen Ebene bewegt werden, werden auch als "Horizontal-Sorter" bezeichnet. In derartigen Förderanlagen sind die Schienen im Wesentlichen in der horizontalen Ebene angeordnet, und eine Antriebskette, meist aus elastomerem Material, ist entlang des Förderweges und dem Verlauf der Schienen folgend angeordnet und geführt. "Im Wesentlichen in der horizontalen Ebene angeordnet" bedeutet, dass der Förderweg bzw. die Schienen auch Steigungen und/oder Gefälle aufweisen kann. Die Antriebskette ist meist unterhalb der Schienen angeordnet und geführt und ist während des Betriebs der Förderanlage ständig umlaufend in Bewegung. Um die Förderwagen auf den Schienen entlang dem Förderweg zu bewegen, werden die Förderwagen über Verbindungsvorrichtungen mit der Antriebskette verbunden. Hierbei ergibt sich das Problem, dass die Position und Ausrichtung des Förderwagens und der Antriebskette relativ zueinander entlang des Förderweges veränderlich ist. Dies ist insbesondere in Kurven und bei ansteigenden/absinkenden Abschnitten des Förderweges aufgrund des Polygoneffektes der Fall, da die Führungsrollen des Förderwagens im Gegensatz zur Antriebskette nicht kreisrund auf- und ablaufen, sodass es zu Abwinkelungen des Förderwagens kommt. Dadurch bewegt sich der Förderwagen auf einem Polygon (Vieleck) mit unterschiedlich vielen Sehnen entsprechend dem Radius des Schienenverlaufs. Zusätzlich eilt der Befestigungspunkt der Antriebskette stets dem Befestigungspunkt des Förderwagens voraus. Ferner kann dies durch Montageungenauigkeiten oder Toleranzen begründet sein.

Um ein gewisses Maß an Veränderungen der Position und Ausrichtung des Förderwagens und der Antriebskette relativ zueinander zu erlauben, werden bisher aufwendige Konstruktionen als Verbindungsvorrichtungen eingesetzt, die aus einer Vielzahl von Verbindungselementen und Gelenken bestehen. Dies führt zu einer aufwendigen Montage der Förderanlage und zu hohen Kosten der Verbindungsvorrichtungen.

EP 0 222 444 A2 offenbart eine Verbindungsvorrichtung nach dem Oberbegriff des Anspruchs 1. Das besagte Dokument offenbart ein Kugelgelenk mit einem an einem Ende eines Gewindedoms ausgebildeten Kopf, welches dazu vorgesehen ist, das kugelförmige Ende eines Kegelzapfens aufzunehmen, der an einem der Kugel gegenüberliegenden Ende einen Gewindesitz aufweist. Der Kopf hat ein zylindrisches Durchgangsloch, innerhalb dessen eine Aufnahme fest angebracht ist, die außen komplementär zu dem zylindrischen Loch und innen teilweise kugelförmig ausgebildet ist, um die Kugel aufzunehmen.

US020130001043A1 offenbart eine Sortiervorrichtung zum Sortieren von Produkten, beispielsweise Gepäckstücke, mit einem Transportmechanismus zum Herunterbewegen des zu sortierenden Produktes von der Stützfläche an einem gewünschten Sortierort, wobei der Transportmechanismus ein Drückelement und einen Bewegungsmechanismus aufweist, der das Drückelement an einem Sortierort seitlich bewegt, so dass das Drückelement das zu sortierende Produkt von der Stützfläche drückt. Der Transportmechanismus enthält weiter je Sortiereinheit zwei Führungen zum Führen von jeweils zwei Führungselementen des Drückelements während der seitlichen Bewegung des Drückelements.

Es ist daher Aufgabe der vorliegenden Erfindung, eine Verbindungsvorrichtung sowie einen Förderwagen und eine Förderanlage bereitzustellen, welche einfach in der Herstellung und in der Montage ist.

Diese Aufgabe wird durch eine Verbindungsvorrichtung zum Verbinden eines Förderwagens mit einer Antriebskette nach Anspruch 1 gelöst. Bevorzugte Ausführungsformen ergeben sich aus den abhängigen Ansprüchen.

Gemäß der Erfindung wird eine Verbindungsvorrichtung zum Verbinden eines Förderwagens mit einer Antriebskette bereitgestellt, aufweisend: - einen Schwenkhebel, welcher schwenkbar mit dem Förderwagen verbindbar ist; - eine Kettenbefestigung, welche mit der Antriebskette verbindbar ist; und - eine Gelenkverbindung, welche den Schwenkhebel und die Kettenbefestigung verbindet; wobei die Gelenkverbindung drei rotatorische Freiheitsgrade zwischen dem Schwenkhebel und der Kettenbefestigung aufweist.

Vorteilhafterweise wird durch die erfindungsgemäße Konfiguration eine stabile Verbindungsvorrichtung zwischen Förderwagen und Antriebskette bereitgestellt, welche wenig Teile aufweist, einfach in der Montage ist und günstig in der Herstellung ist. Ferner werden durch die Verbindungsvorrichtung die Relativbewegungen zwischen Förderwagen und Antriebskette auf vorteilhafte Weise aufgenommen, was zu einer erhöhten Laufruhe, durch geringere Reibungsverluste zu einem niedrigeren, notwendigen Antriebsmoment und zu einer verbesserten Lebensdauer der Förderanlage führt.

Bei dem Förderwagen kann es sich um einen Förderwagen oder Förderschlitten einer Sortieranlage, insbesondere eines "Horizontal-Sorters" handeln. Der Förderwagen ist im Montagezustand bzw. im Betriebszustand auf den Schienen der Förderanlage angeordnet. Der Förderwagen kann einen Fördergurt als Auflagefläche für Fördergut aufweisen, wobei die Gurtförderrichtung des Fördergurtes quer zur Bewegungsrichtung bzw. zum Förderweg des Förderwagens entlang der Schienen verlaufen kann.

Bei der Antriebskette kann es sich um eine Antriebskette aus elastomerem Material handeln. Durch die Verwendung von elastomerem Material lässt die Antriebskette eine ein gewisses Maß an Verdrehung und/oder Auslenkung zu. Vorzugsweise ist die Antriebskette eine Gummiblock-Kette (GBK), welche eine einfache und stabile Befestigungsmöglichkeit bietet. Die Antriebskette kann unterhalb der Schienen angeordnet und geführt sein und kann während des Betriebs der Förderanlage ständig umlaufend in Bewegung sein.

Der Schwenkhebel kann eine längliche Form aufweisen und sich im Montagezustand zumindest abschnittsweise in der horizontalen Ebene erstrecken. Die Länge des Schwenkhebels kann beispielsweise etwa 100 mm bis etwa 1000 mm, vorzugsweise etwa 100 mm bis etwa 200 mm aufweisen. Vorzugsweise ist die Länge des Schwenkhebels geringer als die Länge des Förderwagens in Förderrichtung des Förderwagens. Der Schwenkhebel kann auch als "Schwenkarm" bezeichnet werden.

Mit "Montagezustand" oder "Betriebszustand" ist ein Zustand gemeint, in dem die Verbindungsvorrichtung mit dem Förderwagen und der Antriebskette verbunden ist und der Förderwagen derart auf den Schienen positionert und ausgerichtet ist, dass die Auflagefläche des Förderwagens für das Fördergut in der horizontalen Ebene liegt. Wenn in der vorliegenden Beschreibung und in den Ansprüchen Richtungs- oder Positionsangaben gemacht werden, ohne ausdrückliche Nennung des Zustands, so sind diese Angaben stets im Zusammenhang mit dem Montagezustand bzw. dem Betriebszustand zu verstehen. Der Schwenkhebel kann sich auch zumindest abschnittsweise vertikal und/oder schräg nach unten erstrecken, insbesondere im Verbindungsbereich mit der Gelenkverbindung. Der Schwenkhebel ist in der horizontalen Ebene relativ zum Förderwagen schwenkbar, vorzugsweise ausschließlich in der horizontalen Ebene relativ zum Förderwagen schwenkbar. In einem Grundzustand erstreckt sich der Schwenkhebel vorzugsweise im Wesentlichen in Förderrichtung nach vorne, so dass das freie Ende des Schwenkhebels vorne angeordnet ist. Dies führt zu einer besonders vorteilhaften Verbindung des Förderwagens mit der Antriebskette. Mit "Grundzustand" ist ein Zustand gemeint, den der Förderwagen bzw. die Verbindungsvorrichtung einnimmt, wenn der Förderwagen mittels der Antriebskette in der horizontalen Ebene entlang einer geraden Strecke bewegt wird. Der Schwenkhebel wird vorzugsweise an der Unterseite des Förderwagens mit dem Förderwagen verbunden.

Die Kettenbefestigung kann insbesondere starr mit der Antriebskette verbindbar sein, also ohne jegliche Freiheitsgrade zur Antriebskette. Bei der Kettenbefestigung kann es sich beispielsweise um ein Profilstück handeln, welches beispielsweise mittels zweier Schrauben mit der Antriebskette verklemmt wird. Die Kettenbefestigung weist vorzugsweise einen Abschnitt auf, welcher sich von der Antriebskette schräg und/oder vertikal nach oben erstreckt, um mit der Gelenkverbindung verbunden zu werden. Die Kettenbefestigung kann auch einen Teil eines Gelenks aufweisen, um zusammen mit der Gelenkverbindung ein Gelenk auszubilden.

Die Gelenkverbindung verbindet den Schwenkhebel mit der Kettenbefestigung derart gelenkig miteinander, dass die Kettenbefestigung gegenüber dem Schwenkhebel drei rotatorische Freiheitsgrade aufweist, und umgekehrt. Die Kettenbefestigung ist gegenüber dem Schwenkhebel also um drei orthogonale Achsen, d.h. um die x-, y- und z-Achse, rotierbar. Das gleiche gilt für die Rotierbarkeit des Schwenkhebels gegenüber der Kettenbefestigung. Die Gelenkverbindung zwischen Schwenkhebel und Kettenbefestigung kann auch mehr als drei rotatorische Freiheitsgrade aufweisen. Vorzugsweise weist die Gelenkverbindung zwischen Schwenkhebel und Kettenbefestigung jedoch ausschließlich drei rotatorische Freiheitsgrade auf. Die Gelenkverbindung weist vorzugsweise keinen translatorischen Freiheitsgrad zwischen Schwenkachse und Kettenbefestigung auf. Eine translatorische Verlagerung der Kettenbefestigung relativ zum Förderwagen wird insbesondere durch die schwenkbare Anordnung des Schwenkhebels ermöglicht.

Die Gelenkverbindung kann einerseits mit dem Schwenkhebel verschweißt und/oder verschraubt und/oder verklebt sein, und andererseits mit der Kettenbefestigung verschweißt und/oder verschraubt und/oder verklebt sein. Eine gelenkige Lagerung zwischen Gelenkverbindung und Schwenkhebel bzw. eine gelenkige Lagerung zwischen Gelenkverbindung und Kettenbefestigung ist jedoch auch denkbar. Um einen Abstand zwischen dem Schwenkhebel und der Kettenbefestigung in vertikaler Richtung auszugleichen bzw. zu überbrücken kann die Gelenkverbindung einen Ausgleichsabschnitt, beispielsweise eine Gewindestange oder dergleichen, aufweisen.

Die drei rotatorischen Freiheitsgrade der Gelenkverbindung können mittels eines einzigen Gelenks, beispielsweise eines Kugelgelenks, realisiert werden. Die Gelenkverbindung kann jedoch auch eine Kombination von Gelenken aufweisen.

Der Schwenkhebel weist ein Schwenkgelenk zum Verbinden mit dem Förderwagen auf, wobei in einem Montagezustand der Schwenkhebel mittels des Schwenkgelenks relativ zum Förderwagen in einer horizontalen Ebene schwenkbar ist.

Das Schwenkgelenk ist vorzugsweise ein Scharniergelenk. Das Scharniergelenk kann beispielsweise durch eine Bohrung im Schwenkhebel und eine sich dadurch in vertikaler Richtung erstreckende Schraube ausgebildet sein. Das Schwenkgelenk weist vorzugsweise ausschließlich einen rotatorischen Freiheitsgrad auf. Das Schwenkgelenk kann jedoch auch mehr Freiheitsgrade aufweisen und beispielsweise als Kugelgelenk ausgeführt sein, wobei in diesem Fall die Verbindungsvorrichtung eine Schwenkführung aufweisen kann, mittels welcher die Bewegung des Schwenkhebels in der horizontalen Ebene geführt wird.

Vorzugsweise ist das Schwenkgelenk an einem Endabschnitt des Schwenkhebels angeordnet, insbesondere an einem in Förderrichtung hinteren Endabschnitt des Schwenkhebels angeordnet.

Vorzugsweise ist die Gelenkverbindung an einem Endabschnitt des Schwenkhebels angeordnet, insbesondere an einem in Förderrichtung vorderen Endabschnitt des Schwenkhebels angeordnet.

Mit "Förderrichtung" ist die Förderrichtung bzw. die Bewegungsrichtung des Förderwagens entlang des Förderweges gemeint. Das Schwenkgelenk weist zwei Endabschnitte auf, nämlich einen hinteren Endabschnitt und einen vorderen Endabschnitt. Mit "hinterer Endabschnitt" kann der gesamte hintere Abschnitt des Schwenkhebels ab der Mitte des Schwenkhebels gemeint sein. Mit "vorderer Endabschnitt" kann der gesamte vordere Abschnitt des Schwenkhebels ab der Mitte des Schwenkhebels gemeint sein. Vorzugsweise sind das Schwenkgelenk und die Gelenkverbindung beabstandet voneinander an dem Schwenkhebel angeordnet, wobei der Abstand über etwa 40%, vorzugsweise über etwa 50%, besonders bevorzugt über etwa 60% der Gesamtlänge des Schwenkhebels betragen kann. Vorzugsweise ist die Gelenkverbindung in Förderrichtung vor dem Schwenkgelenk an dem Schwenkhebel angeordnet.

Vorzugsweise weist die Gelenkverbindung ein Kugelgelenk auf.

Vorteilhafterweise ermöglicht das Vorsehen eines Kugelgelenks die Bereitstellung der nötigen Freiheitsgrade zwischen Kettenbefestigung und Schwenkhebel auf einfache Weise mittels eines Bauteils.

Der Gelenkkopf des Kugelgelenks kann mit der Kettenbefestigung verschraubt und/oder verschweißt und/oder verklebt sein. Alternativ kann jedoch auch die Gelenkpfanne des Kugelgelenks mit der Kettenbefestigung verschraubt sein. Vorzugsweise weist die Gelenkverbindung ausschließlich ein Kugelgelenk auf. Besonders bevorzugt weist die Verbindungsvorrichtung zwischen dem Förderwagen und der Antriebskette ausschließlich das Schwenkgelenk und das Kugelgelenk als gelenkige Verbindungselemente auf.

Vorzugsweise ist eine Öffnung einer Gelenkpfanne des Kugelgelenks im Wesentlichen in Förderrichtung nach vorne gerichtet.

Insbesondere ist die Öffnung der Gelenkpfanne im Grundzustand des Schwenkhebels nach vorne gerichtet. Vorteilhafterweise wird durch diese Konfiguration eine Überlastsicherung bereitgestellt, da das Kugellager als Sollbruchstelle fungieren kann. Bei der nach vorne geöffneten Konfiguration des Kugellagers kann der Gelenkkopf des Kugellagers bei einem abrupten Anhalten des Förderwagens, beispielsweise bei einem Zusammenstoß des Förderwagens mit einem Hindernis, nach vorne in Förderrichtung aus der Gelenkpfanne herausgezogen werden. Somit werden Beschädigungen des Förderwagens, der Antriebskette und/oder der Schienen der Förderanlage verhindert. Es entfällt daher die Notwendigkeit der Bereitstellung einer separaten Sollbruchstelle bzw. Überlastsicherung.

Vorzugsweise weist die Verbindungsvorrichtung ferner eine Schwenkbegrenzung zur Begrenzung des Schwenkbereichs des Schwenkhebels auf, wobei die Schwenkbegrenzung an dem Förderwagen anordenbar ist.

Bei der Schwenkbegrenzung kann es sich um zwei Anschläge handeln, welche den Schwenkhebel im Grundzustand beidseitig in horizontaler Richtung umgeben. Die Anschläge können plattenförmig ausgebildet sein und mit dem Förderwagen, insbesondere der Unterseite davon, verschweißt und/oder verschraubt und/oder verklebt sein. Es ist jedoch auch möglich, ohnehin vorhandene Schrauben, die an der Unterseite des Förderwagens vorstehen, als Anschläge zu verwenden, beispielsweise die Schrauben zum Befestigen des Reiblagers oder des Stehlagers des Förderwagens.

Vorzugsweise weist die Verbindungsvorrichtung ferner eine Schwenkführung auf, welche ein freies Ende des Schwenkhebels führt und/oder stützt, wobei die Schwenkführung an dem Förderwagen anordenbar ist.

Insbesondere stützt die Schwenkführung das freie Ende des Schwenkhebels in vertikaler Richtung und führt so den Schwenkhebel in der horizontalen Ebene. Durch die Schwenkführung kann vorteilhafterweise das Schwenkgelenk entlastet werden. Das freie Ende des Schwenkhebels kann eine Führungsrolle aufweisen, welche mit der Schwenkführung zusammenwirkt, wodurch ein Gleiten des Schwenkhebels in der Schwenkführung verbessert wird. Die Führungsrolle kann mittels einer Gleitlagerbuchse an dem Schwenkhebel gelagert sein. Die Schwenkführung ist vorzugsweise ein Bügel, welcher an dem Förderwagen, insbesondere an einer Unterseite davon, verschweißt, verschraubt und/oder verklebt wird. Der Bügel kann zugleich die Funktionen der Schwenkbegrenzung und der Schwenkführung erfüllen.

Vorzugsweise ist der Schwenkhebel aus Kunststoff ausgebildet.

"Aus Kunststoff ausgebildet" bedeutet, dass der Schwenkhebel zumindest teilweise aus Kunststoff besteht, also Kunststoff umfasst. Als Kunststoffmaterial für den Schwenkhebel kann ein Kunststoffmaterial, das für Gleitbewegungen mit sehr geringer Reibung optimiert wurde, beispielsweise ein PE-UHMW (=ultrahochmolekulares Polyethylen), oder Polyamid, verwendet werden. Kunststoff ist kostengünstig und weist generell gute Gleiteigenschaften auf, so dass durch die Verwendung von Kunststoff die Herstellungskosten gesenkt, und ein Gleiten des Schwenkhebels in der Schwenkführung verbessert werden kann. Weiter ist bei der Verwendung von Kunststoff für den Schwenkhebel vorteilhaft, dass eine Sollbruchstelle und somit ein Überlastschutz bereitgestellt werden kann. Insbesondere kann der Schwenkhebel derart konfiguriert werden, dass bei einem abrupten Anhalten des Förderwagens, beispielsweise bei einem Zusammenstoß des Förderwagens mit einem Hindernis, der Schwenkhebel aus Kunststoff bricht.

Gemäß einem weiteren Aspekt wird ein Förderwagen bereitgestellt, aufweisend die vorstehend beschriebene Verbindungsvorrichtung, wobei der Schwenkhebel schwenkbar mit dem Förderwagen verbunden ist.

Gemäß einem weiteren Aspekt wird eine Förderanlage bereitgestellt, aufweisend: - zumindest einen Förderwagen; - Schienen, welche entlang eines Förderweges angeordnet sind; und - zumindest eine Antriebskette, welche im Wesentlichen dem Verlauf der Schienen folgend angeordnet ist; wobei der Förderwagen auf den Schienen angeordnet ist, und wobei der Förderwagen mittels einer vorstehend beschriebenen Verbindungsvorrichtung mit der Antriebskette verbunden ist.

Bei der Förderanlage kann es sich um eine Sortieranlage, insbesondere um einen "Crossbelt-Sorter" des Typs "Horizontal-Sorter" handeln.

Das vorstehend im Bezug auf die erfindungsgemäße Verbindungsvorrichtung Geschriebene gilt entsprechend auch für den erfindungsgemäßen Förderwagen und die erfindungsgemäße Förderanlage.

Im Folgenden werden Ausführungsformen der vorliegenden Erfindung anhand der beiliegenden Figuren näher beschrieben. Es versteht sich, dass die vorliegende Erfindung nicht auf diese Ausführungsformen beschränkt sind, und dass einzelne Merkmale der Ausführungsformen frei zu neuen Ausführungsformen kombiniert werden können.

Es zeigen:
- **Fig. 1:**: einen Förderwagen mit einer Verbindungsvorrichtung gemäß einer ersten Ausführungsform in einer Seitenansicht;
- **Fig. 2:**: den Förderwagen mit der Verbindungsvorrichtung gemäß der ersten Ausführungsform in einer Vorderansicht;
- **Fig. 3:**: einen Förderwagen mit einer Verbindungsvorrichtung gemäß einer zweiten Ausführungsform in einer Seitenansicht;
- **Fig. 4:**: den Förderwagen mit der Verbindungsvorrichtung gemäß der zweiten Ausführungsform in einer Vorderansicht;
- **Fig. 5:**: einen Förderwagen mit einer Verbindungsvorrichtung gemäß einer dritten Ausführungsform in einer Seitenansicht;
- **Fig. 6:**: den Förderwagen mit der Verbindungsvorrichtung gemäß der dritten Ausführungsform in einer Vorderansicht;
- **Fig. 7:**: einen Förderwagen mit einer Verbindungsvorrichtung gemäß einer vierten Ausführungsform in einer Seitenansicht;
- **Fig. 8:**: den Förderwagen mit der Verbindungsvorrichtung gemäß der vierten Ausführungsform in einer Vorderansicht;
- **Fig. 9:**: einen Förderwagen mit einer Verbindungsvorrichtung gemäß einer fünften Ausführungsform in einer Seitenansicht;
- **Fig. 10:**: den Förderwagen mit der Verbindungsvorrichtung gemäß der fünften Ausführungsform in einer Vorderansicht;
- **Fig. 11:**: einen Förderwagen mit einer Verbindungsvorrichtung gemäß einer sechsten Ausführungsform in einer Seitenansicht;
- **Fig. 12:**: den Förderwagen mit der Verbindungsvorrichtung gemäß der sechsten Ausführungsform in einer Vorderansicht;

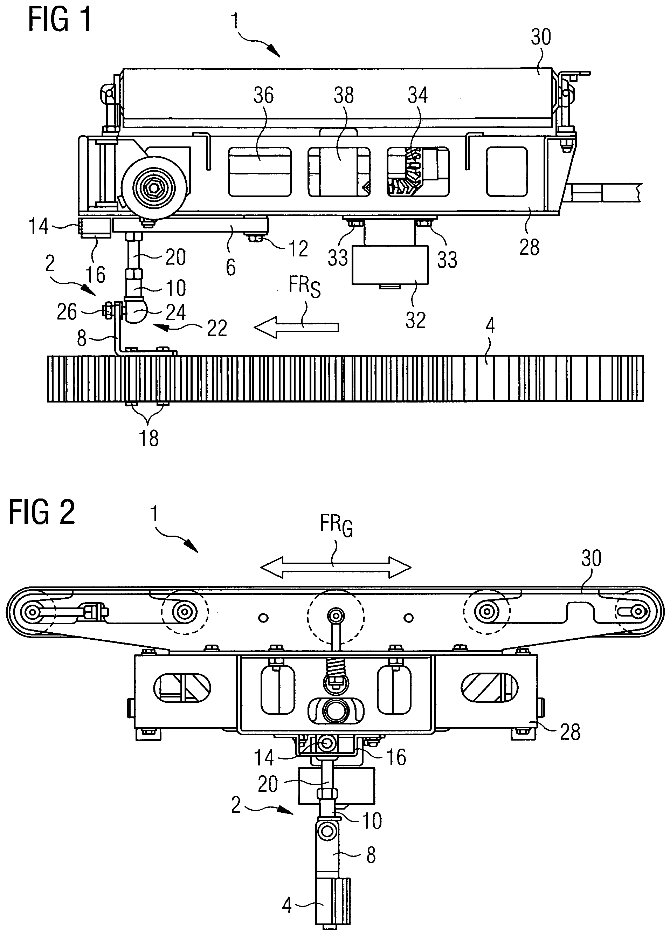

Figuren 1 und 2 zeigen einen Förderwagen 1 mit einer Verbindungsvorrichtung 2 gemäß einer ersten Ausführungsform. Hierbei zeigt Fig. 1 den Förderwagen 1 in einer Ansicht von der Seite im Bezug auf die Längsrichtung des Förderwagens bzw. auf die Förderrichtung FR_{S} des Förderwagens 1. Fig. 2 hingegen zeigt den Förderwagen 1 in einer Ansicht von Vorne im Bezug auf die Förderrichtung FR_{S} des Förderwagens 1.

Die Verbindungsvorrichtung 2 verbindet den Förderwagen 1 mit der Antriebskette 4, welche entlang der Förderrichtung FR_{S} angeordnet ist und bewegbar ist. Die Verbindungsvorrichtung 2 weist einen Schwenkhebel 6, eine Kettenbefestigung 8 und eine Gelenkverbindung 10 auf. Der Schwenkhebel 6 erstreckt sich in horizontaler Richtung nach vorne und weist an einem in Förderrichtung FR_{S} hinteren Ende davon ein Schwenkgelenk 12 in Form eines Scharniergelenks auf, welches an der Unterseite des Förderwagens 1 mit diesem verschraubt ist. Das vordere, freie Ende des Schwenkhebels 6 weist eine Führungsrolle 14 auf, welche in einer Schwenkführung 16 geführt wird, wobei die Schwenkführung in Form eines bügelförmig gebogenen Blechs ausgebildet ist, welches mit der Unterseite des Förderwagens 1 verschweißt ist. Der Schwenkhebel 6 ist aus umgeformten Flachstahl gefertigt.

Die Kettenbefestigung 8 weist ein L-förmiges Winkelprofil auf, welches mittels zweier Befestigungsschrauben 18 mit der Antriebskette 4 starr, d.h. ohne Freiheitsgrade, verbunden wird. Die Antriebskette 4, welche eine Gummiblock-Kette (GBK) ist, kann hierzu Befestigungsausnehmungen aufweisen, durch welche die Befestigungsschrauben 18 gesteckt werden können. An einem in vertikaler Richtung oberen Ende der Kettenbefestigung 8 kann eine Bohrung bzw. eine Ausnehmung ausgebildet sein, um die Kettenbefestigung 8 mit der Gelenkverbindung 10 zu verbinden.

Die Gelenkverbindung 10 weist eine Gewindestange 20 auf, welche an einem in vertikaler Richtung oberen Ende mit einem vorderen Endabschnitt des Schwenkhebels 6 verschraubt ist. Die Gewindestange 20 ist an ihrem unteren Ende mit einem Kugelgelenk 22, insbesondere mit der Gelenkpfanne 24 davon, verbunden. Die Öffnung der Gelenkpfanne 24 ist nach vorne gerichtet. Der Zapfen des Gelenkkopfs 26 erstreckt sich aus der Gelenkpfanne 24 im Wesentlichen nach vorne, und ist mit der Kettenbefestigung 8 verschraubt.

Der Förderwagen 1 ist auf (nicht gezeigten) Schienen angeordnet und weist eine Wagenbasis 28 und einen darauf angeordneten Fördergurt 30 auf, welche als Auflagefläche für das Fördergut dient. Die Gurtförderrichtung FR_{G} des Fördergurtes verläuft quer zur Förderrichtung FR_{S} des Förderwagens. Zum Antreiben des Fördergurtes 30 weist der Förderwagen 1 eine Reibrolle 32 auf, welche um eine vertikale Achse rotierbar ist. Über eine Kegelradanordnung 34 wird die Rotation der Reibrolle 32 auf eine in Förderrichtung FR_{S} angeordnete Antriebswelle 36 übertragen. Die Antriebswelle 36 weist eine Antriebsrolle 38 auf, welche mit dem Fördergurt 30 im Eingriff steht und diesen Antreiben kann.

Die Reibrolle 32 ist über eine Vielzahl von Reibrollen-Befestigungsschrauben 33 an der Unterseite des Förderwagens 1 befestigt. Es ist grundsätzlich denkbar, eine der Reibrollen-Befestigungsschrauben 33 auch als Befestigungsschraube für das Schwenkgelenk 12 zu verwenden, wodurch eine Schraube eingespart und die Herstellungskosten weiter gesenkt werden können.

Um den Fördergurt 30 an einer gewünschten Position des Förderweges zu betätigen, kann an dieser gewünschten Position ein (nicht gezeigtes) Reibelement vorgesehen werden, welches beim Passieren des Förderwagens mit der Reibrolle 32 in Eingriff tritt und diese in Rotation versetzt. Je nachdem, auf welcher Seite der Reibrolle 32 das Reibelement angeordnet wird, kann der Fördergurt entweder in die eine oder in die andere Gurtförderrichtung FR_{G} bewegt werden. Das Reibelement kann steuerbar sein.

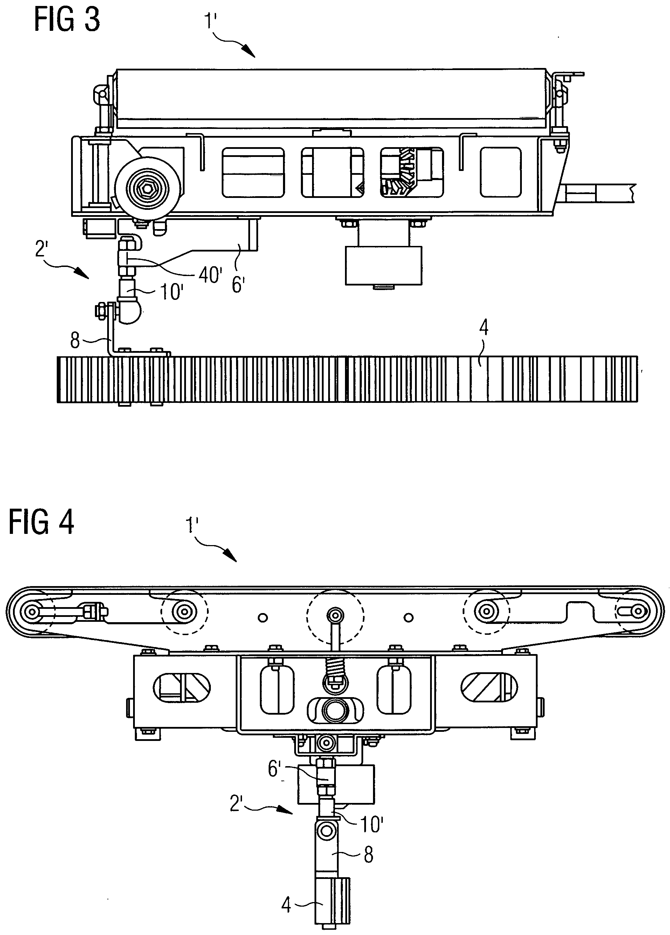

Figuren 3 und 4 zeigen einen Förderwagen 1' mit einer Verbindungsvorrichtung 2' gemäß einer zweiten Ausführungsform. Die zweite Ausführungsform unterscheidet sich von der ersten Ausführungsform lediglich in der Ausbildung des Schwenkhebels 6'. Hinsichtlich der restlichen Merkmale wird daher auf die Beschreibung der ersten Ausführungsform verwiesen.

Anders als bei der ersten Ausführungsform ist der Schwenkhebel 6' der zweiten Ausführungsform im Aluminium-Druckgussverfahren hergestellt. Hierdurch können die Herstellungskosten weiter gesenkt werden. Ferner weist der Schwenkhebel 6' an dem vorderen Endabschnitt davon einen in vertikaler Richtung tiefergesetzten Befestigungsarm 40 zum Befestigen der Gelenkverbindung 10 auf.

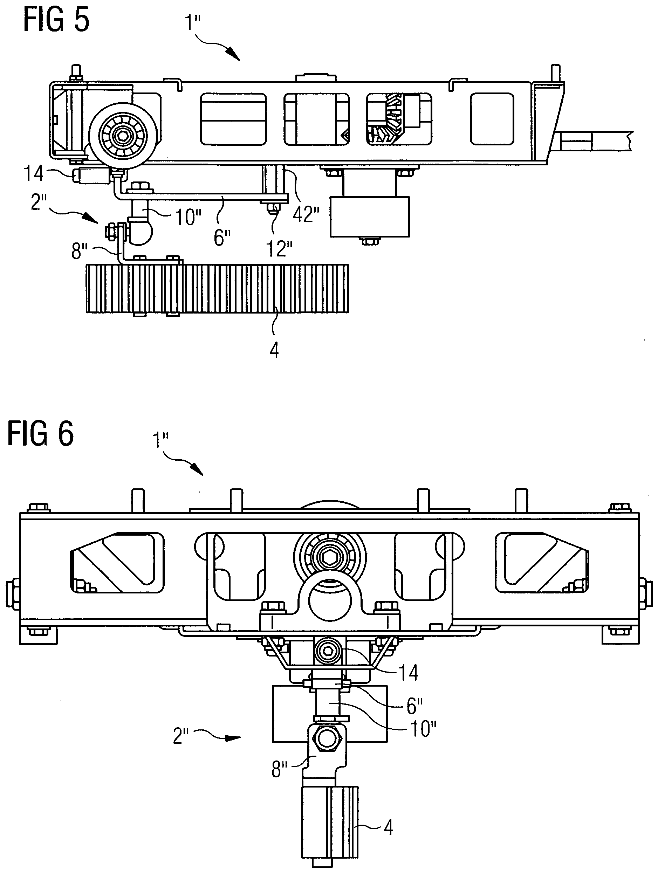

Figuren 5 und 6 zeigen einen Förderwagen 1" mit einer Verbindungsvorrichtung 2" gemäß einer dritten Ausführungsform. Es sei angemerkt, dass in den Figuren 5 bis 12 der Fördergurt der Einfachheit halber nicht dargestellt ist. Die dritte Ausführungsform unterscheidet sich von der ersten Ausführungsform lediglich in der Ausbildung des Schwenkhebels 6" und der Gelenkvorrichtung 10". Hinsichtlich der restlichen Merkmale wird daher auf die Beschreibung der ersten Ausführungsform verwiesen.

Anders als bei der ersten Ausführungsform und der zweiten Ausführungsform ist der Schwenkhebel 6" der dritten Ausführungsform aus einem gebogenen Blech ausgebildet. Das Schwenkgelenk 12" am hinteren Ende des Schwenkhebels 6" weist eine Achsverlängerung 42 auf. Von dem hinteren Ende des Schwenkhebels 6" erstreckt sich der Schwenkhebel 6" in horizontaler Richtung nach vorne bis zum Befestigungspunkt der Gelenkverbindung 10". Danach ist der Schwenkhebel 6" um etwa 90° nach oben gebogen und weist schließlich an seinem Ende die Führungsrolle 14 auf. Durch die Achsverlängerung 42, welche als Abstandhalter zwischen der Unterseite des Förderwagens 1" und des Schwenkhebels 6" dient, ist ausreichend viel Platz für die Montage der Gelenkverbindung 10" vorgesehen. Anders als bei der ersten und zweiten Ausführungsform weist die Gelenkverbindung 10" keine Gewindestange, sondern eine Gewindebohrung auf, welche sich in vertikaler Richtung in der Gelenkverbindung 10" erstreckt. Die Gelenkverbindung 10" kann daher mittels einer einfachen Schraube mit dem Schwenkhebel 6" verbunden werden.

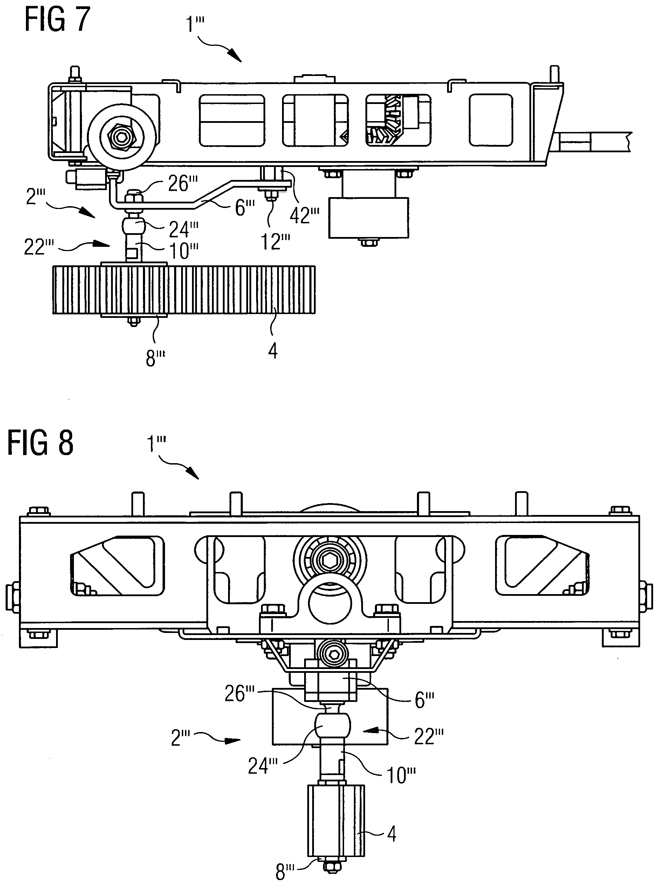

Figuren 7 und 8 zeigen einen Förderwagen 1'" mit einer Verbindungsvorrichtung 2'" gemäß einer vierten Ausführungsform. Die vierte Ausführungsform unterscheidet sich von der ersten Ausführungsform in der Ausbildung des Schwenkhebels 6'" und der Gelenkvorrichtung 10"' und der Kettenbefestigung 8"'. Die Ausbildung des Schwenkhebels 6'" entspricht in Etwa die der dritten Ausführungsform. Die Achsverlängerung 42'" ist lediglich etwas kürzer ausgeführt, und der Schwenkhebel 6'" erstreckt sich von dem Schwenkgelenk 12'" zunächst in horizontaler Richtung nach vorne, weist dann einen geneigten, nach vorne abfallenden Abschnitt auf, und erstreckt sich dann weiter in horizontaler Richtung nach vorne bis zum Befestigungspunkt der Gelenkverbindung 10"'. Hinsichtlich der restlichen Merkmale wird auf die Beschreibung der ersten Ausführungsform verwiesen.

Anders als bei den ersten bis dritten Ausführungsformen ist das Kugelgelenk 22'" der vierten Ausführungsform nicht als Winkelgelenk, sondern als Axialgelenk ausgeführt. D.h. der Zapfen des Gelenkkopfs 26'" und der Zapfen der Gelenkpfanne 24'" liegen in der Grundstellung auf einer Linie. Bei einem Winkelgelenk gemäß den ersten bis dritten Ausführungsformen sind die Zapfen hingegen senkrecht zueinander angeordnet. Bei der vierten Ausführungsform ist der Gelenkkopf 26'" mit dem Schwenkhebel 6'" verschraubt, und die Gelenkpfannen-Seite der Gelenkverbindung 10'" ist mit der Kettenbefestigung 8'" und mit der Antriebskette 4 verschraubt. Hierbei werden ober- und unterhalb der Antriebskette 4 zwei Platten festgeklemmt. Diese fixieren zwei Bolzen, die beidseitig an einem Gummiblock der Gummiblock-Kette 4 anliegen. Die Öffnung der Gelenkpfanne 24'" ist vertikal nach oben gerichtet. Die Konfiguration gemäß der vierten Ausführungsform ermöglicht eine einfache Befestigung an die Antriebskette 4 bei verbesserter Verdrehsicherung und bei verbesserter Aufnahme von Drehmomenten an Steigungsübergängen und beim Anfahren.

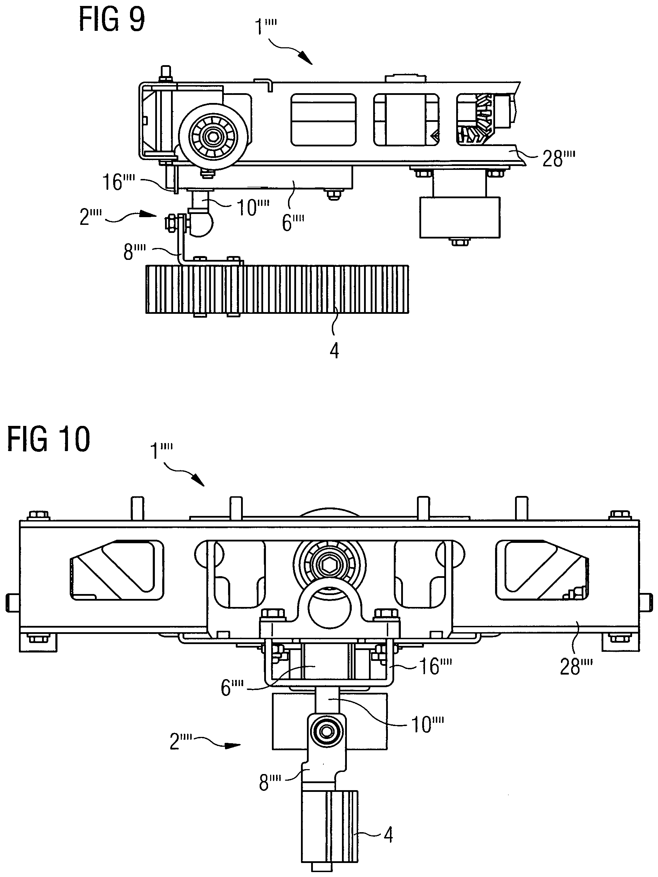

Figuren 9 und 10 zeigen einen Förderwagen 1"" mit einer Verbindungsvorrichtung 2"" gemäß einer fünften Ausführungsform. Die fünfte Ausführungsform unterscheidet sich von der ersten Ausführungsform lediglich in der Ausbildung des Schwenkhebels 6"" und der Gelenkvorrichtung 10"". Hinsichtlich der restlichen Merkmale wird daher auf die Beschreibung der ersten Ausführungsform verwiesen.

Bei der fünften Ausführungsform ist der Schwenkhebel 6"" aus Kunststoff, insbesondere aus PE-UHMW oder Polyamid ausgebildet, wobei das freie Ende des Schwenkhebels 6"" in der bügelförmigen bzw. laschenförmigen Schwenkführung 16"" geführt ist. Durch die Verwendung von Kunststoff mit guten Gleiteigenschaften kann bei der fünften Ausführungsform auf eine Führungsrolle verzichtet werden. Ferner kann die Schwenkführung 16"" wesentlich dünner ausgeführt werden, so dass ein aus der Wagenbasis 28"" herausgebogener Blechabschnitt ausreichend sein kann. Am vorderen Endabschnitt des Schwenkhebels 6"" ist die Gelenkverbindung 10"" befestigt. Die Gelenkverbindung 10"" kann mit dem Schwenkhebel 6"" verschraubt und/oder verklebt sein.

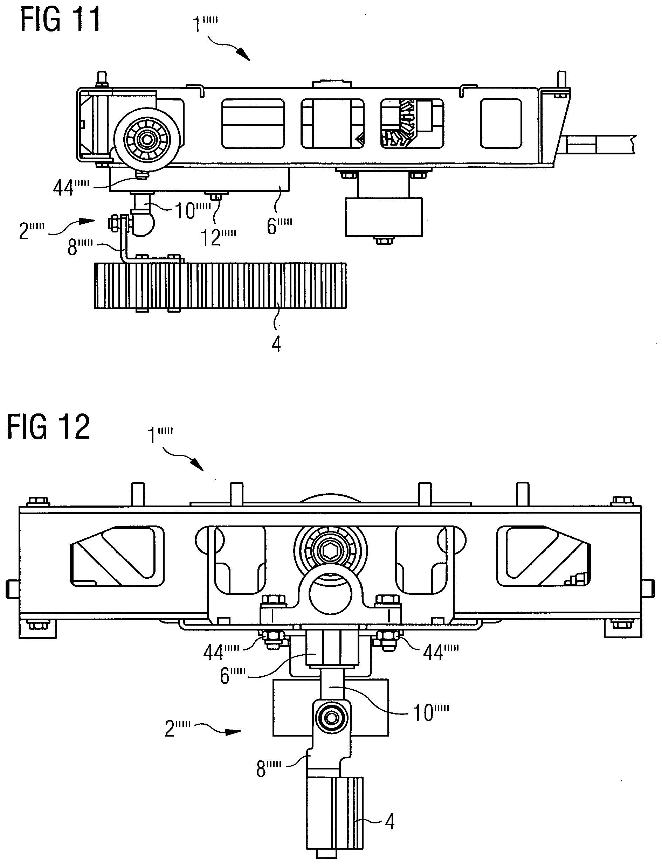

Figuren 11 und 12 zeigen einen Förderwagen 1""' mit einer Verbindungsvorrichtung 2""' gemäß einer sechsten Ausführungsform. Die sechste Ausführungsform unterscheidet sich von der fünften Ausführungsform darin, dass keine Schwenkführung 16 vorgesehen ist, und dass das Schwenkgelenk 12'"'' in einem der Mitte des Schwenkhebels 6""' angenäherten Bereich des hinteren Endabschnitts des Schwenkhebels 6'"" angeordnet ist. Durch diese Anordnung wirkt das hintere Ende des Schwenkhebels 6""' als Stütze gegen vertikale Zugkräfte, welche durch das Weglassen der Schwenkführung 16 am vorderen Endabschnitt des Schwenkhebels 6'"'' von der Gelenkverbindung 10"'" auf den Schwenkhebel 6""' wirken und ein Drehmoment erzeugen. Als weiterer Unterschied zur fünften Ausführungsform werden bei der sechsten Ausführungsform die Schrauben, mit denen die Lager der Führungsrollen bzw. die Stehlager am Förderwagen befestigt sind, und welche an der Unterseite des Förderwagens nach unten vorstehen, als Schwenkbegrenzungen 44""" verwendet, welche den Schwenkbereich des Schwenkhebels 6""" begrenzen. Hinsichtlich der restlichen Merkmale wird auf die Beschreibung der ersten und fünften Ausführungsformen verwiesen.

### Bezugszeichenliste

- 1-1"'": Förderwagen
- 2-2""': Verbindungsvorrichtung
- 4: Antriebskette
- 6-6""': Schwenkhebel
- 8-8'"": Kettenbefestigung
- 10-10""': Gelenkverbindung
- 12; 12";: Schwenkgelenk
- 12"; 12''':
- 14: Führungsrolle
- 16; 16"": Schwenkführung
- 18: Befestigungsschraube
- 20: Gewindestange
- 22; 22"': Kugelgelenk
- 24; 24'": Gelenkpfanne
- 26: Gelenkkopf
- 28; 28"": Wagenbasis
- 30: Fördergurt
- 32: Reibrolle
- 33: Reibrollen-Befestigungsschraube
- 34: Kegelradanordnung
- 36: Antriebswelle
- 38: Antriebsrolle
- 40': Befestigungsarm
- 42"; 42"': Achsverlängerung
- 44'"": Schwenkbegrenzung
- FR_{S}: Förderrichtung des Förderwagens
- FR_{G}: Gurtförderrichtung des Fördergurtes

## Patentansprüche

1. Verbindungsvorrichtung (2-2'"") zum Verbinden eines Förderwagens (1-1""') mit einer Antriebskette (4), aufweisend:
- einen Schwenkhebel (6-6""'), welcher schwenkbar mit dem Förderwagen (1-1""') verbindbar ist;
- eine Kettenbefestigung (8-8""'), welche mit der Antriebskette (4) verbindbar ist; und
- eine Gelenkverbindung (10-10""'), welche den Schwenkhebel (6-6''"') und die Kettenbefestigung (8-8""') verbindet;
wobei die Gelenkverbindung (10-10'"") drei rotatorische Freiheitsgrade zwischen dem Schwenkhebel (6-6""') und der Kettenbefestigung (8-8'"") aufweist,
wobei der Schwenkhebel (6-6''"') ein Schwenkgelenk (12; 12"; 12""; 12'"") zum Verbinden mit dem Förderwagen (1-1'"") aufweist, wobei in einem Montagezustand der Schwenkhebel (6-6""') mittels des Schwenkgelenks (12; 12"; 12""; 12""') relativ zum Förderwagen (1-1'"") in einer horizontalen Ebene schwenkbar ist.

2. Verbindungsvorrichtung (2-2""') nach Anspruch 1, wobei das Schwenkgelenk (12; 12"; 12""; 12'"") an einem Endabschnitt des Schwenkhebels angeordnet ist, insbesondere an einem in Förderrichtung hinteren Endabschnitt des Schwenkhebels angeordnet ist.

3. Verbindungsvorrichtung (2-2'"") nach einem der vorangehenden Ansprüche, wobei die Gelenkverbindung (10-10""') an einem Endabschnitt des Schwenkhebels (6-6""') angeordnet ist, insbesondere an einem in Förderrichtung (FRₛ) vorderen Endabschnitt des Schwenkhebels (6-6'"") angeordnet ist.

4. Verbindungsvorrichtung (2-2'"") nach einem der vorangehenden Ansprüche, wobei die Gelenkverbindung (10-10""') ein Kugelgelenk aufweist.

5. Verbindungsvorrichtung (2; 2'; 2"; 2""; 2'"") nach Anspruch 4, wobei eine Öffnung einer Gelenkpfanne (24; 24'") des Kugelgelenks (22; 22"') im Wesentlichen in Förderrichtung (FRₛ) nach vorne gerichtet ist.

6. Verbindungsvorrichtung (2-2""') nach einem der vorangehenden Ansprüche, ferner aufweisend eine Schwenkbegrenzung (44'"") zur Begrenzung des Schwenkbereichs des Schwenkhebels (6-6""'), wobei die Schwenkbegrenzung (44""') an dem Förderwagen (1-1""') anordenbar ist.

7. Verbindungsvorrichtung (2-2"") nach einem der vorangehenden Ansprüche, ferner aufweisend eine Schwenkführung (16; 16""), welche ein freies Ende des Schwenkhebels führt und/oder stützt, wobei die Schwenkführung (16; 16"") an dem Förderwagen (1-1"") anordenbar ist.

8. Verbindungsvorrichtung (2""; 2'"") nach einem der vorangehenden Ansprüche, wobei der Schwenkhebel (6""; 6'"") aus Kunststoff ausgebildet ist.

9. Förderwagen (1-1'"") mit einer Verbindungsvorrichtung (2-2""') nach einem der Ansprüche 1 bis 8, wobei der Schwenkhebel (6-6""') schwenkbar mit dem Förderwagen (1-1) verbunden ist.

10. Förderanlage, aufweisend:
- zumindest einen Förderwagen (1 -1'"") nach Anspruch 9;
- Schienen, welche entlang eines Förderweges angeordnet sind; und
- zumindest eine Antriebskette (4), welche im Wesentlichen dem Verlauf der Schienen folgend angeordnet ist;
wobei der Förderwagen (1-1""') auf den Schienen angeordnet ist, und
wobei der Förderwagen (1-1'"") mittels der Verbindungsvorrichtung (2-2""') mit der Antriebskette (4) verbunden ist.

## Claims

1. A connecting device (2-2""') for connecting a conveying carriage (1-1""') to a drive chain (4), having:
- a swivel lever (6-6'"") which can be connected swivelably to the conveying carriage (1-1"'");
- a chain attachment (8-8'"") which can be connected to the drive chain (4); and
- an articulated connection (10-10""') which connects the swivel lever (6-6""') and the chain attachment (8-8""');
wherein the articulated connection (10-10""') has three rotational degrees of freedom between the swivel lever (6-6"'") and the chain attachment (8-8'""),
wherein the swivel lever (6-6""') has a swivel joint (12; 12"; 12""; 12"'") for connecting to the conveying carriage (1-1""'), wherein in an installation state the swivel lever (6-6"'") can be swiveled relative to the conveying carriage (1-1'"") in a horizontal plane by means of the swivel joint (12; 12"; 12""; 12'"").

2. The connecting device (2-2'"") according to claim 1, wherein the swivel joint (12; 12"; 12""; 12""') is arranged on an end section of the swivel lever, in particular on an end section of the swivel lever to the rear in the conveying direction.

3. The connecting device (2-2'"") according to one of the preceding claims,
wherein the articulated connection (10-10'"") is arranged on an end section of the swivel lever (6-6""'), in particular on an end section of the swivel lever (6-6'"") to the front in the conveying direction (FRs).

4. The connecting device (2-2""') according to one of the preceding claims,
wherein the articulated connection (10-10"'") has a ball joint.

5. The connecting device (2; 2'; 2"; 2""; 2""') according to claim 4, wherein an opening in a socket (24; 24"') of the ball joint (22; 22"') is oriented substantially forwards in the conveying direction (FRₛ).

6. The connecting device (2-2""') according to one of the preceding claims, further having a swivel limiter (44""') for limiting the swiveling range of the swivel lever (6-6""'), wherein the swivel limiter (44""') can be arranged on the conveying carriage (1-1"'").

7. The connecting device (2-2"") according to one of the preceding claims, further having a swivel guide (16; 16"") which guides and/or supports a free end of the swivel lever, wherein the swivel guide (16; 16"") can be arranged on the conveying carriage (1-1"").

8. The connecting device (2""; 2'"") according to one of the preceding claims, wherein the swivel lever (6""; 6"'") is designed to be made of plastic.

9. A conveying carriage (1-1'"") with a connecting device (2-2""') according to one of claims 1 to 8, wherein the swivel lever (6-6"'") is connected swivelably to the conveying carriage (1-1'"").

10. A conveying installation, having:
- at least one conveying carriage (1-1"'") according to claim 9;
- tracks which are arranged along a conveying path; and
- at least one drive chain (4) which is arranged substantially following the course of the tracks;
wherein the conveying carriage (1-1""') is arranged on the tracks, and
wherein the conveying carriage (1-1'"") is connected to the drive chain (4) by means of the connecting device (2-2'"").

## Revendications

1. Dispositif de liaison (2-2""') destiné à relier un chariot de transport (1-1'"") avec une chaîne d'entraînement (4), présentant :
- un levier pivotant (6-6'"") apte à être relié de façon pivotante au chariot de transport (1-1"'") ;
- une fixation de chaîne (8-8""') apte à être reliée à la chaîne d'entraînement (4) ; et
- une liaison articulée (10-10""') reliant le levier pivotant (6-6'"") et la fixation de chaîne (8-8""') ;
dans lequel la liaison articulée (10-10'"") présente trois degrés de liberté de rotation entre le levier pivotant (6-6"'") et la fixation de chaîne (8-8'""),
dans lequel le levier pivotant (6-6""') présente une articulation pivotante (12 ; 12" ; 12"" ; 12"'") pour la liaison avec le chariot de transport (1-1'""), dans lequel le levier pivotant (6-6"") peut être pivoté dans un état de montage par rapport au chariot de transport (1-1'"") dans un plan horizontal au moyen de l'articulation pivotante (12 ; 12" ; 12"" ; 12"'") .

2. Dispositif de liaison (2-2"'") selon la revendication 1, dans lequel l'articulation pivotante (12 ; 12" ; 12"" ; 12"'") est disposée au niveau d'une section d'extrémité du levier pivotant, en particulier au niveau d'une section d'extrémité arrière du levier pivotant dans la direction de transport.

3. Dispositif de liaison (2-2'"") selon l'une des revendications précédentes, dans lequel la liaison articulée (10-10"'") est disposée au niveau d'une section d'extrémité du levier pivotant (6-6""'), en particulier au niveau d'une section d'extrémité avant du levier pivotant (6-6'"") dans la direction de transport (FR_{S}).

4. Dispositif de liaison (2-2""') selon l'une des revendications précédentes, dans lequel la liaison articulée (10-10""') présente une articulation sphérique.

5. Dispositif de liaison (2 ; 2' ; 2" ; 2"" ; 2'"") selon la revendication 4, dans lequel une ouverture d'une cuvette d'articulation (24 ; 24"') de l'articulation sphérique (22 ; 22"') est orientée essentiellement vers l'avant dans la direction de transport (FR_{S}).

6. Dispositif de liaison (2-2"'") selon l'une des revendications précédentes, présentant en outre une limitation de pivotement (44""') destinée à délimiter la région de pivotement du levier pivotant (6-6""'), dans lequel la limitation de pivotement (44'"") peut être disposée sur le chariot de transport (1-1"'").

7. Dispositif de liaison (2-2"") selon l'une des revendications précédentes, présentant en outre un guide de pivotement (16 ; 16""), lequel guide et/ou soutient une extrémité libre du levier pivotant, dans lequel le guide de pivotement (16 ; 16"") peut être disposé sur le chariot de transport (1-1"").

8. Dispositif de liaison (2"" ; 2""') selon l'une des revendications précédentes, dans lequel le levier pivotant (6"" ; 6""') est conçu en plastique.

9. Chariot de transport (1-1""') comprenant un dispositif de liaison (2-2""') selon l'une des revendications 1 à 8, dans lequel le levier pivotant (6-6""') est relié de façon pivotante au chariot de transport (1-1"'").

10. Système de transport présentant :
- au moins un chariot de transport (1-1'"") selon la revendication 9 ;
- des rails disposés le long d'un trajet de transport ; et
- au moins une chaîne d'entraînement (4) disposée de manière à suivre essentiellement le parcours des rails ;
dans lequel le chariot de transport (1-1""') est disposé sur les rails, et
dans lequel le chariot de transport (1-1""') est relié à la chaîne d'entraînement (4) au moyen du dispositif de liaison (2-2""') .
